# FASCICULE DE BREVET EUROPEEN

(11) **EP 1 163 562 B1**
(45) Date de publication et mention de la délivrance du brevet: **18.05.2011**
(21) Numéro de dépôt: 00907725.6
(22) Date de dépôt: 25.02.2000
(51) Int. Cl.: G06F 21/02

(54) **PROCEDE DE SECURISATION D'UN ENCHAINEMENT D'OPERATIONS REALISEES PAR UN CIRCUIT ELECTRONIQUE DANS LE CADRE DE L'EXECUTION D'UN ALGORITHME**
VERFAHREN ZUR SICHERUNG EINER REIHE VON OPERATIONEN IN EINER ELEKTRONISCHEN SCHALTUNG ZUR DURCHFÜHRUNG EINES ALGORITHMUS
METHOD FOR MAKING SECURE A SEQUENCE OF OPERATIONS PERFORMED BY AN ELECTRONIC CIRCUIT IN THE EXECUTION OF AN ALGORITHM

(30) Priorité: 25.02.1999 FR 9902364
(43) Date de publication de la demande: 19.12.2001
(73) Titulaire: STMicroelectronics S.A., 92120 Montrouge (FR)
(72) Inventeur: ROMAIN, Fabrice, F-13090 Aix-en-Provence (FR)
(74) Mandataire: Bentz, Jean-Paul
(86) Numéro de dépôt international: PCT/FR2000/000472
(87) Numéro de publication internationale: WO 2000/050977

(56) Documents cités:
- EP-A- 0 448 262
- WO-A-97/33217
- GB-A- 2 319 705
- COHEN F B: "OPERATING SYSTEM PROTECTION THROUGH PROGRAM EVOLUTION" COMPUTERS & SECURITY. INTERNATIONAL JOURNAL DEVOTED TO THE STUDY OF TECHNICAL AND FINANCIAL ASPECTS OF COMPUTER SECURITY,NL,ELSEVIER SCIENCE PUBLISHERS. AMSTERDAM, vol. 12, no. 6, page 565-584 XP000415701 ISSN: 0167-4048
- DALLAS SEMICONDUCTOR CORP.: "SECTION 1: INTRODUCTION" 6 octobre 1993 (1993-10-06) , DATA BOOK SOFT MICROCONTROLLER, PAGE(S) 1-3,7,8,73,77-80,82,152-156,229,290-292 XP002053731 page 78

## Description

La présente invention se rapporte à un procédé de sécurisation d'un enchaînement d'opérations réalisées par un circuit électronique dans le cadre de l'exécution d'un algorithme.

Plus particulièrement, l'invention concerne un procédé de sécurisation d'un enchaînement d'opérations utiles, de même type, réalisées par un circuit électronique dans le cadre de l'exécution d'un algorithme, la sécurisation étant apportée par la présence d'informations parasites qui gênent l'observation, depuis l'extérieur du circuit électronique, des manifestations physiques associées à l'exécution des opérations utiles.

Dans le cadre de l'invention, un algorithme doit être compris en tant qu'enchaînement d'actions nécessaires à l'accomplissement d'une tâche. Il ne s'agit par conséquent pas nécessairement de la mise en oeuvre d'un programme informatique.

Le domaine d'application de l'invention est essentiellement le domaine de la cryptologie. La cryptologie peut se définir comme étant la science de la dissimulation de l'information. Elle constitue, avec la sécurité physique des composants et des systèmes d'exploitation, la dimension essentielle de la sécurité des cartes à puces. La cryptologie englobe la cryptographie, qui est l'art de chiffrer et de déchiffrer des messages, et la cryptanalyse, qui est l'art de casser les codes secrets.

Dans les cartes à puce, la cryptographie met en oeuvre divers mécanismes qui ont pour but d'assurer soit la confidentialité des informations, soit l'authentification des cartes ou des utilisateurs, soit encore la signature des messages.

L'ensemble des moyens mettant en oeuvre la cryptographie forme un crypto-système. De tels crypto-systèmes renferment des informations confidentielles, notamment pour chiffrer et déchiffrer des messages numériques.

Parmi ces informations confidentielles, on peut citer les clés de chiffrement et de déchiffrement, qui sont des paramètres d'une convention secrète utilisée pour le chiffrement et le déchiffrement de messages numériques.

L'utilisation de ces clés de chiffrement et de déchiffrement nécessite souvent plusieurs transferts des données les caractérisant. Lors de leur utilisation au sein d'un crypto-système, les données caractéristiques de clés numériques et d'autres informations confidentielles circulent entre différents registres et modules de mémoire ou de traitement. Ces transferts entre registres et/ou modules se traduisent par l'apparition de courants électriques ou de champs magnétiques porteurs d'informations confidentielles. Les informations confidentielles peuvent, par exemple, concerner des clés de chiffrement et de déchiffrement.

De tels crypto-systèmes posent un problème de visibilité depuis le monde extérieur. En effet, une mesure des signaux électriques ou des champs magnétiques nés des échanges d'informations entre différentes parties du circuit peut permettre d'accéder à des informations confidentielles qui participent à la protection de données par le système de chiffrement ou de déchiffrement.

Par exemple, un des signaux électriques peut se situer au niveau du plot d'alimentation du circuit, que ce dernier soit interne ou externe.

En effet, au moment de l'utilisation de la clé numérique par un composant habilité tel qu'une carte à puce, une certaine visibilité, par exemple sur la clé numérique, est rendue possible par l'étude de tels signaux électriques. Les signaux électriques sensibles peuvent être observés sur différents plots du circuit reliant notamment différents registres ou modules de mémoire ou de traitement.

Une clé numérique peut ainsi être découverte suite à une accumulation de mesures de signaux électriques ou magnétiques et à une étude statistique de ces mesures.

D'une façon plus générale, tout circuit électronique a une consommation électrique liée aux opérations qu'il effectue. Il est possible, en mesurant cette consommation, de découvrir des informations cachées dans le circuit. Ce problème se pose en tout composant sécurisé, et notamment les composants pour cartes à puce.

La découverte de données protégées par observation de courant nécessite en général une reproductibilité de la mesure de courant afin d'effectuer les traitements statistiques.

Ainsi, lorsqu'un circuit électronique exécute un algorithme contenant des opérations identiques ou voisines, et répétitives, telles que des transferts de données confidentielles entre registres, et où l'observation fine des opérations une par une peut révéler une information confidentielle, une analyse statistique fondée sur la mesure des courants électriques précédemment cités peut nuire à la sécurité du circuit electronique.

La publication de Hollmann H. D. L. et al: Protection of software algorithms executed on secure modules, FUTURE GENERATIONS COMPUTER SYSTEMS, Vol. 13, No. 1, 01-07-1997, page 55-63, XP004081709 décrit un procédé de sécurisation tel que défini dans le préambule de la revendication 1.

L'invention concerne un procédé tel que défini dans la revendication 1. D'autre modes de réalisation selon l'invention sont spécifiés dans les revendications dépendantes attenantes. Notamment, l'utilisation de la méthode revendiquée ainsi que son implémentation dans un dispositif électronique et carte à puce sont également définis dans les revendications 3 à 5.

La présente invention a pour objet de pallier les problèmes qui viennent d'être décrits.

L'invention propose donc une méthode permettant de parer à une divulgation, par observation du courant, de données protégées.

A cet effet, l'invention propose un procédé de sécurisation d'un enchaînement d'opérations réalisées par un circuit électronique dans le cadre de l'exécution d'un algorithme qui assure la non-visibilité vis-à-vis d'une analyse des signaux électriques lors des transferts de données entre différents registres.

Pour atteindre ces objectifs, l'invention propose d'insérer des opérations factices dans un enchaînement d'opérations utiles, de même type, effectuées dans le cadre de l'exécution d'un algorithme. Les opérations factices sont très ressemblantes aux opérations utiles. Chaque opération factice est insérée à un rang aléatoire pour chaque exécution de l'algorithme. Ainsi, l'acquisition de mesures de courant comparables devient très difficile.

Une opération factice peut être conçue comme une opération présentant une signature identique ou très proche en pratique d'une opération utile en termes de paramètres physiques observables associés à l'exécution de cette instruction (consommation de courant, rayonnement magnétique, etc.). Ces paramètres physiques peuvent être notamment détectés au niveau d'un terminal d'alimentation en courant ou en tension du circuit.

De la sorte, les présentes opérations factices ne peuvent pas être détectées échantillon par échantillon, et donc empêchent ou du moins rendent très difficile une analyse statistique.

L'invention concerne donc un procédé de sécurisation d'un enchaînement d'opérations utiles, de même type, réalisées par un circuit électronique dans le cadre de l'exécution d'un algorithme, chacune des opérations utiles correspondant à une étape de l'algorithme, caractérisé en ce que le procédé comprend l'étape consistant à introduire de façon aléatoire une ou plusieurs opérations factices, de même type, dans l'enchaînement d'opérations utiles.

Une opération factice du même type qu'une opération utile peut prendre différentes formes selon l'application en cours, dès lors qu'elle présente des caractéristiques physiques qui apparaissent identiques ou suffisamment proches d'une opération utile pour rendre sa détection difficile. A titre d'exemple non-limitatif, une opération factice peut être l'exécution réelle d'un calcul, mais sans enregistrement du résultat en mémoire, ou avec enregistrement, mais dans une mémoire inopérante pour l'opération considérée.

Les opérations factices permettent ainsi d'introduire de faux calculs, ou de faux sous-ensembles d'opérations.

La présente invention concerne également un dispositif électronique d'exécution d'un algorithme, par exemple une carte à puce, caractérisé en ce qu'il met en oeuvre le procédé de sécurisation précité, éventuellement avec les aspects optionnels qui sont décrits dans ce qui suit.

Les différents aspects et avantages de l'invention apparaîtront plus clairement dans la suite de la description, qui présente un exemple de mise en oeuvre préféré du procédé selon l'invention et qui n'est donné qu'à titre indicatif et nullement limitatif de l'invention.

Selon un mode préféré de l'invention, un certain nombre d'opérations factices sont insérées entre des opérations utiles, de même type, réalisées par un circuit électronique dans le cadre de l'exécution d'un algorithme. Ces opérations factices sont introduites de façon aléatoire : ces opérations factices peuvent être introduites entre n'importe quelle opération utile associée à l'algorithme.

On peut également trouver une ou plusieurs opérations factices avant la première opération utile associée à un algorithme ou après la dernière opération utile associée à un algorithme. On peut également trouver plusieurs opérations factices consécutives.

Afin de donner des séries de mesure de courant différentes à chaque exécution d'un même algorithme, de nouveaux aléas sont introduits à chaque exécution d'un algorithme.

Néanmoins, dans une application préférée, le procédé selon l'invention comprend l'étape supplémentaire consistant à maintenir un écart de temps constant entre la réalisation de deux opérations, qu'elles soient utiles et/ou factices successives. Ainsi, l'insertion des opérations factices n'apparaît pas de façon évidente lors d'une étude temporelle des signaux électriques associés aux opérations utiles réalisées par un circuit électronique dans le cadre de l'exécution d'un algorithme.

Enfin, il est préférable, mais pas obligatoire, que le nombre d'opérations factices introduites dans l'enchaînement d'opérations utiles soit constant pour chaque nouvelle exécution de l'algorithme. Ainsi, le temps d'exécution de l'algorithme dans sa totalité est le même à chaque exécution de l'algorithme. Le fait que des opérations factices ont été introduites est ainsi invisible en première analyse, ce qui assure encore une meilleure sécurisation de l'enchaînement d'opérations utiles.

Selon l'invention, il est également possible de distribuer les aléas seulement sur certaines parties de l'algorithme. De plus, le procédé selon l'invention peut également s'appliquer à des algorithmes dont les opérations sont ordonnées, c'est-à-dire que les opérations utiles doivent s'enchaîner dans un ordre qu'on ne peut pas changer.

Le nombre d'opérations factices introduites est, dans une application préférée de l'invention, de l'ordre de 2 pourcent sur le nombre total d'opérations effectuées.

## Revendications

1. Procédé de sécurisation d'un enchaînement d'opérations utiles, de même type, réalisées par un circuit électronique dans le cadre de l'exécution d'un algorithme, chacune des opérations utiles correspondant à une étape de l'algorithme,
ledit procédé comprenant l'étape consistant à introduire de façon aléatoire une ou plusieurs opérations factices, de même type, dans l'enchaînement d'opérations
une opération factice de même_type étant une opération présentant une signature sensiblement identique à la signature d'une opération utile en termes de paramètres physiques observables associés à l'exécution de cette instruction, et ledit procédé étant **caractérisé en ce qu'**il comprend l'étape supplémentaire consistant à maintenir un écart de temps constant entre la réalisation de deux opérations utiles et/ou factices successives.

2. Procédé selon la revendications 1, **caractérisé en ce que** le nombre d'opérations factices introduites dans l'enchaînement d'opérations est constant pour chaque nouvelle exécution de l'algorithme.

3. Utilisation du procédé selon l'une des revendications précédentes dans le domaine de la cryptographie.

4. Dispositif électronique d'exécution d'un algorithme, **caractérisé en ce qu'**il met en oeuvre le procédé de sécurisation selon l'un quelconque des revendications 1 à 2.

5. Carte à puce comprenant un dispositif électronique d'exécution d'un algorithme, **caractérisé en ce qu'**il met en oeuvre le procédé de sécurisation selon l'une quelconque des revendications 1 à 2.

## Claims

1. Method for making secure a sequence of working operations, of the same type, performed by an electronic circuit in the execution of an algorithm, wherein each of the working operations corresponds to a step of the algorithm, the said method comprising the step consisting of introducing randomly one or more dummy operations, of the same type, in the sequence of operations, a dummy operation of the same type being an operation that presents a signature that is essentially identical to the signature of a working operation in terms of observable physical parameters associated with the execution of this instruction, and said method being **characterised in that** it comprises the supplementary step consisting in maintaining a constant interval between the execution of two successive working and/or dummy operations.

2. Method according to Claim 1, **characterised in that** the number of dummy operations introduced into the sequence of operations is constant for each new execution of the algorithm.

3. Use of the method according to one of the preceding claims in the field of cryptography.

4. Electronic device for executing an algorithm, **characterised in that** it implements the securing method according to one of claims 1 or 2.

5. Smart card comprising an electronic device for executing an algorithm, **characterised in that** it implements the securing method according to one of claims 1 or 2.

## Patentansprüche

1. Verfahren zur Sicherung einer Verknüpfung von dienlichen Operationen gleicher Art, die im Rahmen der Durchführung eines Algorithmus in einer elektronischen Schaltung erfolgen, wobei jede der dienlichen Operationen einem Schritt im Algorithmus entspricht, wobei das Verfahren einen Schritt umfasst, der darin besteht, zufallsbedingt eine oder mehrere Scheinoperationen gleicher Art in die Verknüpfung von Operationen einzubringen, wobei eine Scheinoperation gleicher Art eine Operation mit einer Signatur ist, die im wesentlichen identisch zur Signatur einer dienlichen Operation hinsichtlich der wahrnehmbaren physischen Parameter ist, die mit der Durchführung dieser Anweisung verbunden sind, und wobei das Verfahren **dadurch gekennzeichnet ist, dass** es den zusätzlichen Schritt umfasst, der darin besteht, einen gleichbleibenden Zeitabstand zwischen der Ausführung zweier aufeinanderfolgender dienlicher und/oder scheinbarer Operationen aufrechtzuerhalten.

2. Verfahren nach Anspruch 1, **dadurch gekennzeichnet, dass** die Anzahl an in die Verknüpfung von Operationen eingebrachten Scheinoperationen bei jeder erneuten Durchführung des Algorithmus gleichbleibt.

3. Anwendung des Verfahrens nach einem der vorangehenden Ansprüche im Gebiet der Kryptografie.

4. Elektronische Vorrichtung zum Durchführen eines Algorithmus, **dadurch gekennzeichnet, dass** sie das Verfahren zur Sicherung nach einem der Ansprüche 1 bis 2 durchführt.

5. Chipkarte mit einer elektronischen Vorrichtung zum Durchführen eines Algorithmus, **dadurch gekennzeichnet, dass** sie das Verfahren zur Sicherung nach einem der Ansprüche 1 bis 2 durchführt.
